(19) Europäisches Patentamt
European Patent Office
Office européen des brevets

(11) **EP 3 708 891 A1**

(12) **EUROPÄISCHE PATENTANMELDUNG**

(43) Veröffentlichungstag:
**16.09.2020 Patentblatt 2020/38**

(51) Int Cl.:
***F16K 41/10*** *(2006.01)*     ***F16K 39/02*** *(2006.01)*

(21) Anmeldenummer: **20157546.1**

(22) Anmeldetag: **17.02.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **11.03.2019 DE 102019106157**

(71) Anmelder: **Gemü Gebr. Müller Apparatebau GmbH & Co.**
**Kommanditgesellschaft**
**74653 Ingelfingen (DE)**

(72) Erfinder:
• **Hohenstein, Lukas**
  **74542 Braunsbach (DE)**
• **Haidt, Harald**
  **74613 Öhringen (DE)**
• **Renner, Maximilian**
  **74861 Neudenau (DE)**

(74) Vertreter: **DREISS Patentanwälte PartG mbB**
**Friedrichstraße 6**
**70174 Stuttgart (DE)**

(54) **DIREKTGESTEUERTES SITZVENTIL ZUR BEGRENZUNG EINES FLUSSES EINES PROZESSMEDIUMS**

(57) Es wird ein direktgesteuertes Sitzventil (2) zur Begrenzung eines Flusses eines Prozessmediums bereitgestellt. Das Sitzventil (2) umfasst: einen Ventilkörper (4) umfassend einen Ventilsitz (6), welcher wenigstens zwei Ventilkammern (8, 10) voneinander trennt; eine entlang einer Zustellachse (16) bewegliche Antriebsstange (14); einen in einer ersten der Ventilkammern (8, 10) angeordneten Faltenbalg (22), welcher in einem ersten Bereich (24) zu dem Ventilkörper (4) festgelegt ist, und welcher in einem zweiten Bereich (26) zu der beweglichen Antriebsstange (14) festgelegt ist, wobei der Faltenbalg (22) eine hydraulisch von dem Ventilsitz (6) wegweisend wirkende erste Fläche (Af) bereitstellt;
ein zu der Antriebsstange (14) festgelegtes Absperrmittel (18), welches gemeinsam mit dem Ventilsitz (6) einen Sitzbereich (20) definiert; und einen zwischen dem zweiten Bereich (26) und dem Sitzbereich (20) angeordneten Abschnitt (40), welcher eine hydraulisch in Richtung des Ventilsitzes (6) wirkende zweite Fläche (As) bereitstellt, wobei ein Verhältnis der hydraulisch wirksamen zweiten Fläche (As) zu der hydraulisch wirksamen ersten Fläche (Af) in einem Bereich zwischen 0,3 und 0,7 liegt.

Fig. 1

EP 3 708 891 A1

**Beschreibung**

Die Erfindung betrifft ein direktgesteuertes Sitzventil.

Es ist bekannt, dass die Energiedichte eines Hubmagnets eines direktgesteuerten magnetisch betätigten Sitzventils im Vergleich zu einem pneumatischen oder elektromotorischen Antrieb geringer ist. Somit sind bei den bekannten direktgesteuerten Sitzventilen die erreichbaren Betriebsdrücke bei mit anderen Antriebsarten vergleichbarer Baugröße mit zunehmender Nennweite deutlich geringer.

Für mit pneumatischen und elektromotorischen Antrieben vergleichbare Leistungsdaten bei mittleren und großen Nennweiten (> DN 15) werden bislang überproportional große Hubmagnete benötigt. Dies resultiert in einem größeren Bauraum, hohen Herstellkosten, einem hohen Energieverbrauch und folglich zu einer Unwirtschaftlichkeit bei der Herstellung und über die Lebensdauer des Sitzventils hinweg.

Um diese Nachteile auszugleichen werden meist hilfsgesteuerte Ventile verwendet, bei denen der Mediumsdruck das Öffnen und Schließen unterstützt. Diese Ventile haben den Nachteil, dass ihre Schaltzeiten im Vergleich zu direktgesteuerten Ventilen deutlich länger sind.

Die Nachteile des Standes der Technik werden durch ein direktgesteuertes Sitzventil gemäß dem Anspruch 1 gelöst. Vorteilhafte Weiterbildungen finden sich in den Unteransprüchen und in der nachfolgenden Beschreibung.

Gemäß einem Aspekt dieser Beschreibung wird ein direktgesteuertes Sitzventil zur Begrenzung eines Flusses eines Prozessmediums bereitgestellt. Das Sitzventil umfasst: einen Ventilkörper umfassend einen Ventilsitz, welcher wenigstens zwei Ventilkammern voneinander trennt; eine entlang einer Zustellachse bewegliche Antriebsstange; einen in einer ersten der Ventilkammern angeordneten Faltenbalg, welcher in einem ersten Bereich zu dem Ventilkörper festgelegt ist, und welcher in einem zweiten Bereich zu der beweglichen Antriebsstange festgelegt ist, wobei der Faltenbalg eine hydraulisch von dem Ventilsitz wegweisend wirkende erste Fläche bereitstellt; ein zu der Antriebsstange festgelegtes Absperrmittel, welches gemeinsam mit dem Ventilsitz einen Sitzbereich definiert; und einen zwischen dem Faltenbalg und dem Sitzbereich angeordneten Abschnitt, welcher eine hydraulisch in Richtung des Ventilsitzes wirkende zweite Fläche bereitstellt, wobei ein Verhältnis der hydraulisch wirksamen zweiten Fläche zu der hydraulisch wirksamen ersten Fläche in einem Bereich zwischen 0,3 und 0,7 liegt.

Der bereitgestellte Bereich für das Verhältnis der beiden hydraulisch gegeneinander wirkenden Flächen ermöglicht vorteilhaft wenigstens im geschlossenen Zustand des Sitzventils eine Druckkompensation in Bezug zu der ersten Ventilkammer. Damit können die Betriebsdrücke für das vorgeschlagene Sitzventil erhöht und auf der anderen Seite die notwendigen Antriebskräfte zum Stellen bzw. Regeln des Sitzventils reduziert werden. Folglich kann das Sitzventil wenigstens aus dem geschlossenen Zustand heraus mit reduzierter Antriebskraft geöffnet werden. Durch die Reduzierung der nötigen Antriebskraft verringert sich auch der Verschleiß der bewegten Ventilkomponenten. Vorteilhaft wird damit auch die Lebensdauer des Sitzventils erhöht.

Konstruktiv ergibt sich der Vorteil, dass die Auslegung der ersten und der zweiten hydraulisch wirksamen Flächen weitestgehend entkoppelt vom geplanten Betriebsdruck erfolgen können. Vorsteuerungen für das Sitzventil können entfallen.

Darüber hinaus stellt der Faltenbalg eine vorteilhaft flexible Abdichtung zwischen Trocken- und Medienseite des Sitzventils dar.

Die Schaltzeiten des Sitzventils werden durch die Entkopplung von dem Betriebs- bzw. Mediendruck vorteilhaft verkürzt.

Zwar benötigen die Faltenbälge eine höhere Bewegungskraft im Vergleich zu einem konventionellen magnetisch betätigten Sitzventil, allerdings wird dies durch den Wegfall der Mediumskräfte ab einer Nennweite von DN 6 ausgeglichen und ab DN 8 überwiegen die kraftbezogenen Vorteile. Mit weiterzunehmender Nennweite wirken sich die Vorteile stärker aus und das Volumen des Hubmagneten bzw. des Elektromagneten des Antriebs wird im Verhältnis zum Sitzdurchmesser geringer.

Eine vorteilhafte Ausführungsform zeichnet sich dadurch aus, dass ein gedachter Mantel eines gedachten zur Zustellachse koaxialen Zylinders durch Falten des Faltenbalgs und durch den Sitzbereich verläuft.

Vorteilhaft befindet sich damit der Ventilsitz bzw. der Sitzbereich in radialer Richtung innerhalb des Bereichs, der durch die Falten des Faltenbalgs überdeckt wird. Im gleichen Zuge wird die Abhängigkeit von dem Mediumsdruck reduziert.

Eine vorteilhafte Ausführungsform zeichnet sich dadurch aus, dass ein erster Abstand des gedachten Mantels und einer maximalen medienseitigen zur Zustellachse lotrechten Ausdehnung der Falten des Faltenbalgs und ein zweiter Abstand des gedachten Mantels und einer minimalen medienseitigen Ausdehnung der Falten des Faltenbalgs sich um maximal 20 %, insbesondere um maximal 10 % voneinander unterscheiden.

Durch diese Auslegung der Abstände wird die vorteilhafte Druckentkopplung erreicht.

Eine vorteilhafte Ausführungsform zeichnet sich dadurch aus, dass der gedachte Mantel äquidistant zu einer maximalen medienseitigen zur Zustellachse lotrechten Ausdehnung der Falten des Faltenbalgs und einer minimalen medienseitigen zur Zustellachse lotrechten Ausdehnung der Falten des Faltenbalgs ist.

Insbesondere für geringe Nennweiten bietet die bereitgestellte Äquidistanz den Vorteil der Druckkompensation.

Eine vorteilhafte Ausführungsform zeichnet sich dadurch aus, dass das Verhältnis der hydraulisch wirksamen zweiten Fläche zu der hydraulisch wirksamen ersten Fläche in einem Bereich zwischen 0,4 und 0,6, insbesondere in einem Bereich zwischen 0,45 und 0,55, insbesondere in einem Bereich zwischen 0,47 und 0,52 liegt.

Diese Bereiche stellen vorteilhafte Auslegungen des ersten Abschnitts und des Faltenbalgs zur Druckkompensation bereit.

Eine vorteilhafte Ausführungsform zeichnet sich dadurch aus, dass das Sitzventil umfasst: einen in einer zweiten der Ventilkammern angeordneten zweiten Faltenbalg, welcher in einem dritten Bereich zu dem Ventilkörper und in einem vierten Bereich zu der beweglichen Antriebsstange festgelegt ist, wobei der zweite Faltenbalg eine hydraulisch vom Ventilsitz wegweisend wirkende dritte Fläche bereitstellt; und einen zwischen dem zweiten Faltenbalg und dem Sitzbereich oder zwischen dem zweiten Faltenbalg und einem weiteren Sitzbereich angeordneten zweiten Abschnitt, welcher eine vierte hydraulisch in Richtung des Ventilsitzes wirkende Fläche bereitstellt, und wobei ein weiteres Verhältnis der hydraulisch wirksamen vierten Fläche zu der hydraulisch wirksamen dritten Fläche in einem Bereich zwischen 0,3 und 0,7 liegt.

Damit wird ein Sitzventil bereitgestellt, welches eine zweiseitige Druckkompensation bereitstellt. Eine Abhängigkeit der zur Bewegung der Antriebsstange notwendigen Antriebskraft wird damit vom Betriebsdruck weiter entkoppelt. Folglich wirken auf den Antrieb keine druckabhängigen Mediumskräfte. Dadurch müssen die Antriebe signifikant weniger Antriebskräfte bereitstellen. Somit können Antriebe mit einer nominal geringeren Antriebskraft verwendet werden, was positive Effekte auf Bauraum, Herstellkosten und Energiebedarf hat.

Eine vorteilhafte Ausführungsform zeichnet sich dadurch aus, dass ein bzw. der gedachte Mantel eines bzw. des gedachten zur Zustellachse koaxialen Zylinders durch Falten des zweiten Faltenbalgs und durch den Sitzbereich bzw. den weiteren Sitzbereich verläuft.

Eine vorteilhafte Ausführungsform zeichnet sich dadurch aus, dass ein dritter Abstand des gedachten Mantels und einer maximalen medienseitigen zur Zustellachse lotrechten Ausdehnung der Falten des zweiten Faltenbalgs und ein vierter Abstand des gedachten Mantels und einer minimalen medienseitigen Ausdehnung der Falten des zweiten Faltenbalgs sich um maximal 20 %, insbesondere um maximal 10 % unterscheiden.

Eine vorteilhafte Ausführungsform zeichnet sich dadurch aus, dass der gedachte Mantel äquidistant zu einer maximalen medienseitigen zur Zustellachse lotrechten Ausdehnung der Falten des zweiten Faltenbalgs und einer minimalen medienseitigen zur Zustellachse lotrechten Ausdehnung der Falten des zweiten Faltenbalgs ist.

Eine vorteilhafte Ausführungsform zeichnet sich dadurch aus, dass das weitere Verhältnis der hydraulisch wirksamen vierten Fläche zu der hydraulisch wirksamen dritten Fläche in einem Bereich zwischen 0,4 und 0,6, insbesondere in einem Bereich zwischen 0,45 und 0,55, insbesondere in einem Bereich zwischen 0,47 und 0,52 liegt.

Eine vorteilhafte Ausführungsform zeichnet sich dadurch aus, dass das Sitzventil als Magnetsitzventil ausgebildet ist und einen elektromagnetischen Antrieb umfasst, welcher mit der Antriebsstange zu deren Bewegung entlang der Zustellachse verbunden ist.

In der Zeichnung zeigen:

Figur 1 ein direktgesteuertes Sitzventil in schematischer Form;

Figur 2 in einer schematischen Ansicht die Ermittlung von hydraulisch wirksamen Flächen; und

Figur 3 eine schematische Schnittansicht des direktgesteuerten Sitzventils.

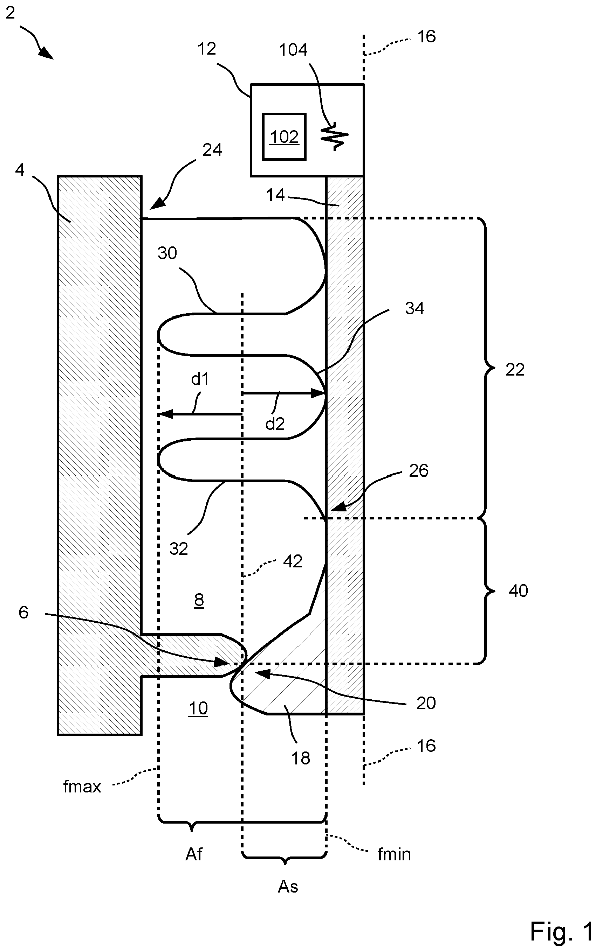

Figur 1 zeigt in schematischer Form ein direktgesteuertes Sitzventil 2, welches zur Begrenzung eines Flusses eines Prozessmediums ausgebildet ist. Ein Ventilkörper 4 stellt einen Ventilsitz 6 bereit, welcher zwei benachbarte Ventilkammern 8 und 10 voneinander trennt. Ein Antrieb 12, welcher insbesondere als elektromagnetischer Antrieb ausgebildet ist, bewegt eine Antriebsstange 14 entlang einer Zustellachse 16. Die vorliegend gezeigten Komponenten sind rotationssymmetrisch um die Zustellachse 16 ausgebildet. Es ist ein durch die Zustellachse 16 begrenzter Schnitt des Sitzventils 2 gezeigt.

Der Antrieb 12 umfasst einen Elektromagneten 102 und ein Federelement 104. Das Federelement 104 bewirkt eine erste Kraft in eine erste Bewegungsrichtung der Antriebsstange 14, wenn der Elektromagnet unbestromt ist. Bei einer Bestromung des Elektromagneten 102 bewirkt dieser eine zweite Kraft in eine zweite der ersten Bewegungsrichtung entgegengerichtete Kraft, wobei die zweite Kraft betragsmäßig größer ist als die erste Kraft. Eine Bestromung des Elektromagneten 102 bewirkt also ein Öffnen des normal-geschlossenen Sitzventils 2 oder ein Schließen eines normal-geöffneten Sitzventils.

Ein Absperrmittel 18 ist zu der beweglichen Antriebsstange 14 festgelegt und drückt im gezeigten Zustand auf den Ventilsitz 6. Das Absperrmittel 18 und der Ventilsitz 6 definieren gemeinsam einen Sitzbereich 20, der beispielsweise durch einen Ringspalt oder eine Ringfläche zwischen dem Ventilsitz 6 und dem Absperrmittel 18 repräsentiert wird.

Ein Faltenbalg 22 ist in der ersten Ventilkammer 8 angeordnet. In einem ersten Bereich 24 ist der Faltenbalg 22 zu dem Ventilkörper 4 festgelegt. Selbstverständlich kann der Ventilkörper 4 einteilig, aber auch mehrteilig aufgebaut sein. In einem zweiten Bereich 26 ist der Faltenbalg 22 zu der beweglichen Antriebsstange 14 festgelegt. Damit trennt der Faltenbalg 22 eine Medienseite der Ventilkammer 8 von einer Trockenseite. Die Trockenseite steht unter Umgebungsdruck, d.h. Atmosphärendruck. Eine mechanische Flexibilität des Faltenbalgs 22 erlaubt eine Bewegung der Antriebsstange 14 entlang der Zustellachse 16. Der Faltenbalg 22 besteht beispielsweise aus einem Kunststoff, beispielsweise einem Polyhalogenolefin wie Polytetrafluorethylen, PTFE.

Durch den Mediumsdruck des Prozessmediums in der Ventilkammer 8 werden Falten 30 und 32 des Faltenbalgs 22 zusammengedrückt. In einem Verbindungsabschnitt 34 zwischen den Falten 30 und 32 heben sich die auf die gegenüberliegenden Flächen wirkende Kräfte auf. Für die erste und die letzte Faltenfläche hingegen bleiben die Kräfte bestehen und bewirken ein Zusammendrücken des gesamten Faltenbalgs 22. Da der Faltenbalg im Bereich 24 zu dem Ventilkörper 4 festgelegt ist, wirkt vorliegend nur die Kraft, welche auf die Falte 32 entgegen einer Richtung des Ventilsitzes 6 gerichtet ist. Entsprechend ergibt sich eine hydraulisch von dem Ventilsitz 6 wegweisend wirkende erste Fläche Af des Faltenbalgs 22. Die Größe der ersten Fläche Af bestimmt also das Zusammendrücken des Faltenbalgs 22 durch einen entsprechenden Betriebsdruck bzw. Mediendruck des Prozessfluids in der Ventilkammer 8.

Selbstverständlich kann die erste Fläche Af auch facettiert ausgeführt sein, d.h. dass mehrere Flächen gemeinsam die erste Fläche Af bestimmen. Dies ist beispielsweise der Fall, wenn die Falten 30 ,32 unterschiedlich groß dimensioniert sind. Folglich ist die erste hydraulisch wirkende Fläche eine in eine Lotrechte der Zustellachse 16 projizierte Fläche. Die vorigen Annahmen gelten selbstverständlich für die weiteren in dieser Beschreibung erläuterten hydraulisch wirkenden Flächen.

Die erste Fläche Af wird in Abhängigkeit von einer minimalen Ausdehnung fmin der Falten 30, 32 und in Abhängigkeit von einer maximalen Ausdehnung fmax der Falten 30, 32 beispielsweise des maximalen Durchmessers der Falten 30, 32 bestimmt.

Ein erster Abschnitt 40 ist beispielsweise zwischen dem zweiten Bereich 26 und dem Sitzbereich 20 angeordnet. Insbesondere ist der erste Abschnitt 40 zwischen dem Faltenbalg 22 und dem Sitzbereich 20 angeordnet. Der erste Abschnitt 40 stellt eine hydraulisch in Richtung des Ventilsitzes 6 wirkende zweite Fläche As bereit, auf welche der in der Ventilkammer 8 herrschende Mediumsdruck wirkt und die Antriebsstange 14 in Richtung des Ventilsitzes 6 drückt.

Ein Verhältnis der hydraulisch wirksamen zweiten Fläche As zu der hydraulisch wirksamen ersten Fläche Af liegt in einem Bereich zwischen 0,3 und 0,7. Außerhalb des bereitgestellten Bereichs für das Verhältnis kann die Druckkompensation gar nicht oder nicht mehr kosteneffizient bereitgestellt werden. Das erste Verhältnis liegt in einem Beispiel einem Bereich zwischen 0,4 und 0,6. Ein weiterer vorteilhafter Bereich für das erste Verhältnis liegt zwischen 0,45 und 0,55. Ein weiterer vorteilhafter Bereich für das erste Verhältnis liegt zwischen 0,47 und 0,52.

Ein gedachter Mantel 42 bzw. eine Mantelfläche eines gedachten Zylinders mit einer Achse, welche mit der Zustellachse 16 zusammenfällt, verläuft durch den Sitzbereich 20. Ein gedachter weitere Mantel eines Zylinders mit der Zustellachse 16 als Achse stellt eine Einhüllende dar, welche die maximale medienseitigen zur Zustellachse lotrechte Ausdehnung fmax der Falten 30 und 32 darstellt. Die minimale zur Zustellachse 16 lotrechte Ausdehnung fmin kann ebenfalls als gedachter Mantel eines zur Zustellachse 16 koaxialen Zylinders angenommen werden. Folglich ergibt sich zwischen dem Mantel 42 und der maximalen Ausdehnung fmax ein erster Abstand d1. Zwischen dem Mantel 42 und der minimalen Ausdehnung fmin ergibt sich ein zweiter Abstand d2. In einem Beispiel sind der erste und der zweite Abstand d1 und d2 gleich groß. In einem weiteren Beispiel weichen der erste Abstand d1 und der zweite Abstand d2 um maximal 20 %, insbesondere um maximal 10 % voneinander ab.

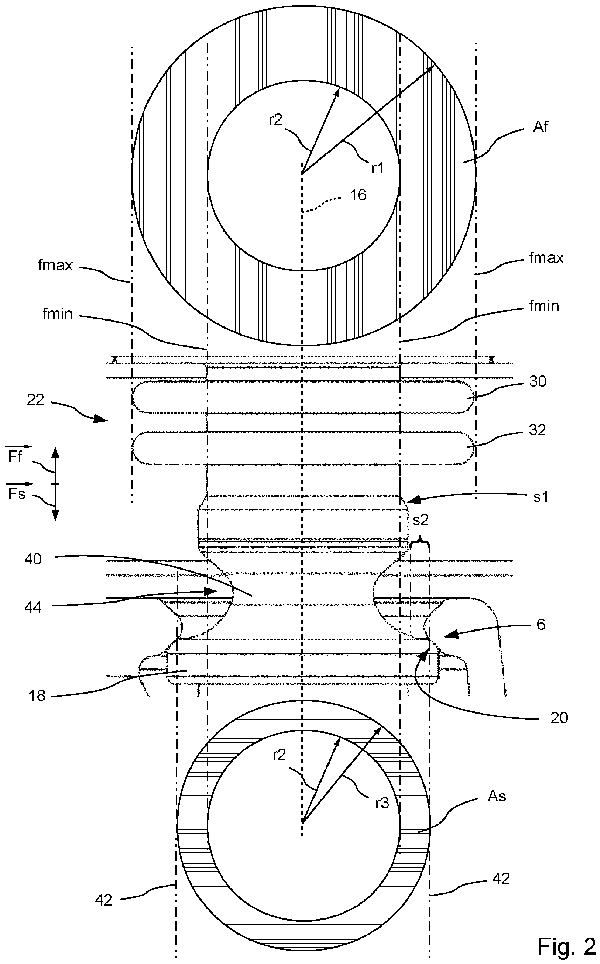

Figur 2 zeigt in schematischer Form die erste und die zweite hydraulisch wirksamen Fläche Af und As des Sitzventils 2. Die Falten 30 und 32 des Faltenbalgs 22 geben die minimale und maximale Ausdehnung fmin und fmax vor. Entsprechend ergeben sich ein erster Radius r1 und ein zweiter Radius r2, aus denen sich die entgegen des Ventilsitzes 6 hydraulisch wirkende erste Fläche Af als Kreisringfläche ergibt. Der Mediumsdruck wirkt auf die erste Fläche Af und resultiert in der vom Ventilsitz 6 weg gerichteten ersten Kraft Ff.

Der erste Abschnitt 40 beginnt entlang der Zustellachse 16 mit dem Ende des Faltenbalgs 22 und endet im Sitzbereich 20. Die zweite Fläche As ist eine Kreisringfläche, welche durch die minimale Ausdehnung fmin und den gedachten Mantel 42 begrenzt ist. Entsprechend ergeben sich ein dritter Radius r3 und der zweite Radius r2, aus denen sich die zweite Fläche As in Form einer Kreisringfläche ermitteln lässt. Der Mediumsdruck wirkt auf die zweite Fläche As und resultiert in der in Richtung des Ventilsitzes 6 gerichteten zweiten Kraft Fs.

Die zweite Fläche As setzt sich vorliegend aus zwei Oberflächen s1 und s2 zusammen, welche in eine lotrechte Ebene der Zustellachse 16 projiziert sind. Eine Ausnehmung 44 des ersten Abschnitts 40 umfasst ebenfalls Oberflächen, deren Wirkung sich unter dem Mediumsdruck jedoch aufheben.

Um beispielsweise im geschlossenen Zustand des Sitzventils 2 eine Druckkompensation zu erreichen, muss die Summe der Beträge der entgegengerichteten ersten und zweiten Kräfte Ff und Fs in idealisierter Form gemäß nachfolgender Gleichung 1 Null ergeben bzw. gegen Null streben. Die auf den Faltenbalg 22 wirkende Kompressionskraft gemäß der ersten Kraft Ff und die in Richtung des Ventilsitzes 6 wirkenden Mediumskräfte gemäß der zweiten Kraft Ff müssen sich also aufheben.

$$|\overrightarrow{F_f}| + |\overrightarrow{F_s}| = 0 \qquad (1)$$

Die erste, den Faltenbalg 22 zusammendrückende Kraft Ff bzw. deren Betrag ergibt sich gemäß Gleichung 2 als Produkt aus dem Mediumsdruck p, der hydraulisch wirksamen ersten Fläche Af und einem Auslegungsfaktor λ des Faltenbalgs 22. Der Auslegungsfaktor λ beschreibt einen Anteil der auf den Faltenbalg 22 wirkenden Druckkraft, welcher bei einem Eindrücken der Falten 30, 32 in die Kompressionskraft umgesetzt wird. Der Auslegungsfaktor λ hängt somit von den Eigenschaften des Materials des Faltenbalgs 22 wie beispielsweise einer Steifigkeit und von der Konstruktion des Faltenbalgs 22 wie beispielsweise einer Wandstärke der Falten ab.

$$|\overrightarrow{F_f}| = pA_f\lambda \qquad (2)$$

Die zweite Kraft Fs bzw. deren Betrag ergibt sich gemäß Gleichung 3 aus dem Mediumsdruck p und der zweiten Fläche As.

$$|\overrightarrow{F_s}| = pA_s \qquad (3)$$

Setzt man den rechten Teil der Gleichungen 2 und 3 in die Gleichung 1 ein, so gelangt man durch Umformen und Kürzen des Mediumsdrucks zu der Gleichung 4, welche den Auslegungsfaktor λ als das erste Verhältnis der hydraulisch wirkenden zweiten Fläche As zu der hydraulisch wirkenden ersten Fläche Af ausdrückt. Folglich ist der Auslegungsfaktor auch als Verhältnis bezeichenbar.

$$\lambda = \frac{A_s}{A_f} \qquad (4)$$

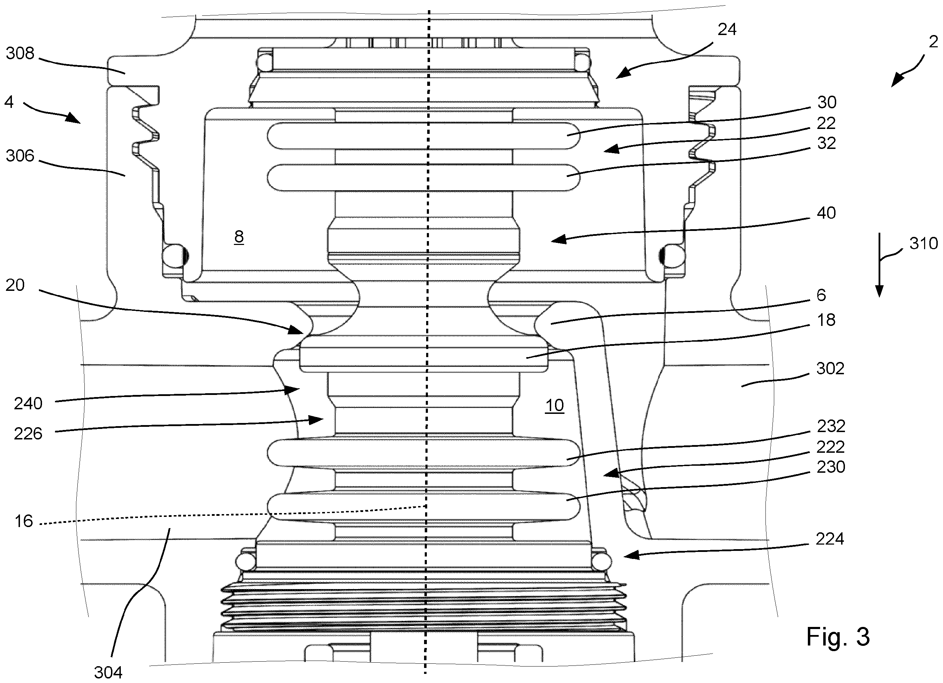

Figur 3 zeigt einen schematischen Schnitt eines Beispiels des direktgesteuerten Sitzventils 2. Ein Zulauf 302 führt in die erste einem Hochdruckbereich zugehörige Ventilkammer 8. Die zweite einem Niederdruckbereich zugehörige Ventilkammer 10 mündet in einen Ablauf 304. Der Ventilkörper 4 ist vorliegend zweiteilig aufgebaut und umfasst einen Hauptkörper 306 und einen in den Hauptkörper 306 eingeschraubten Zusatzkörper 308.

Zusätzlich zu den Figuren 2 und 3 umfasst das Sitzventil 2 eine zweiseitige Druckkompensation. Neben der Druckkompensation durch die in der ersten Ventilkammer 8 angeordneten Komponenten tritt eine Druckkompensation durch in der zweiten Ventilkammer 10 angeordnete Komponenten hinzu. So ist in der zweiten Ventilkammer 10 ein zweiter Faltenbalg 222 mit Falten 230 und 232 angeordnet. In einem dritten Bereich 224 ist der Faltenbalg 222 zu dem Ventilkörper 4 festgelegt. In einem vierten Bereich 226 ist der zweite Faltenbalg 222 zu der Antriebsstange 14 festgelegt. Der zweite Faltenbalg 222 stellt eine hydraulisch vom Ventilsitz 6 wegweisend wirkende dritte Fläche bereit - analog zur ersten Fläche Af.

Ein zweiter Abschnitt 240 ist zwischen dem vierten Abschnitt 226 und dem Sitzbereich 20 angeordnet und stellt - analog zur zweiten Fläche As - eine hydraulisch in Richtung des Ventilsitzes 6 wirkende vierte Fläche bereit. Ein weiteres Verhältnis der hydraulisch wirksamen vierten Fläche zu der hydraulisch wirksamen dritten Fläche liegt in einem Bereich zwischen 0,3 und 0,7. Die vorgenannten Bereichsangaben bezüglich des Verhältnisses der zweiten zu der ersten hydraulisch wirksamen Fläche sind auf das weitere Verhältnis übertragbar.

Neben dem gezeigten Beispiel mit den zwei direkt benachbarten Ventilkammern 8 und 10 ist in einem nicht gezeigten Beispiel des Sitzventils 2 wenigstens eine weitere Ventilkammer zwischen den Ventilkammern 8 und 10 angeordnet, welche mit entsprechenden Ventilsitzen versehen ist.

Das Sitzventil 2 ist in Figur 3 in einem geschlossenen Zustand gezeigt, wobei sich der erste Faltenbalg 22 in einem entlang der Zustellachse 16 entspannten Zustand befindet und der zweite Faltenbalg 222 sich in einem entlang der Zustellachse 16 gestreckten Zustand befindet. Das dem Antrieb zugeordnete Federelement drückt das Absperrmittel 18 entgegen einer Öffnungsrichtung 310 auf den Ventilsitz 6. Wird der Elektromagnet des Antriebs bestromt, so wirkt die von dem Elektromagnet aufgebrachte Kraft entgegen der Kraft des Federelements, bewegt die Antriebsstange 14 in Öffnungsrichtung 310 und öffnet damit das Sitzventil 2.

**Patentansprüche**

1. Ein direktgesteuertes Sitzventil (2) zur Begrenzung eines Flusses eines Prozessmediums, wobei das Sitzventil (2) umfasst:

   einen Ventilkörper (4) umfassend einen Ventilsitz (6), welcher wenigstens zwei Ventilkammern (8, 10) voneinander trennt;
   eine entlang einer Zustellachse (16) bewegliche Antriebsstange (14);
   einen in einer ersten der Ventilkammern (8, 10) angeordneten Faltenbalg (22), welcher in einem ersten Bereich (24) zu dem Ventilkörper (4) festgelegt ist, und welcher in einem zweiten Bereich (26) zu der beweglichen Antriebsstange (14) festgelegt ist, wobei der Faltenbalg (22) eine hydraulisch von dem Ventilsitz (6) wegweisend wirkende erste Fläche (Af) bereitstellt;
   ein zu der Antriebsstange (14) festgelegtes Absperrmittel (18), welches gemeinsam mit dem Ventilsitz (6) einen Sitzbereich (20) definiert; und

einen zwischen dem Faltenbalg (22) und dem Sitzbereich (20) angeordneten Abschnitt (40), welcher eine hydraulisch in Richtung des Ventilsitzes (6) wirkende zweite Fläche (As) bereitstellt, wobei ein Verhältnis der hydraulisch wirksamen zweiten Fläche (As) zu der hydraulisch wirksamen ersten Fläche (Af) in einem Bereich zwischen 0,3 und 0,7 liegt.

2. Das Sitzventil (2) gemäß dem Anspruch 1, wobei ein gedachter Mantel (42) eines gedachten zur Zustellachse (16) koaxialen Zylinders durch Falten (30, 32) des Faltenbalgs (22) und durch den Sitzbereich (20) verläuft.

3. Das Sitzventil (2) gemäß dem Anspruch 2, wobei ein erster Abstand (d1) des gedachten Mantels (42) und einer maximalen medienseitigen zur Zustellachse (16) lotrechten Ausdehnung (fmax) der Falten (30, 32) des Faltenbalgs (22) und ein zweiter Abstand (d2) des gedachten Mantels (42) und einer minimalen medienseitigen Ausdehnung (fmin) der Falten (30, 32) des Faltenbalgs (22) sich um maximal 20 %, insbesondere um maximal 10 % voneinander unterscheiden.

4. Das Sitzventil (2) gemäß dem Anspruch 2, wobei der gedachte Mantel (42) äquidistant zu einer maximalen medienseitigen zur Zustellachse (16) lotrechten Ausdehnung (fmax) der Falten (30, 32) des Faltenbalgs (22) und einer minimalen medienseitigen zur Zustellachse (16) lotrechten Ausdehnung (fmin) der Falten (30, 32) des Faltenbalgs (22) ist.

5. Das Sitzventil (2) gemäß einem der vorstehenden Ansprüche, wobei das Verhältnis der hydraulisch wirksamen zweiten Fläche (As) zu der hydraulisch wirksamen ersten Fläche (Af) in einem Bereich zwischen 0,4 und 0,6, insbesondere in einem Bereich zwischen 0,45 und 0,55, insbesondere in einem Bereich zwischen 0,47 und 0,52 liegt.

6. Das Sitzventil (2) gemäß einem der vorstehenden Ansprüche, wobei das Sitzventil (2) umfasst:

einen in einer zweiten der Ventilkammern (10, 8) angeordneten zweiten Faltenbalg (222), welcher in einem dritten Bereich (224) zu dem Ventilkörper (4) und in einem vierten Bereich (226) zu der beweglichen Antriebsstange (14) festgelegt ist, wobei der zweite Faltenbalg (222) eine hydraulisch vom Ventilsitz (6) wegweisend wirkende dritte Fläche bereitstellt; und
einen zwischen dem zweiten Faltenbalg (222) und dem Sitzbereich (20) oder zwischen dem zweiten Faltenbalg (222) und einem weiteren Sitzbereich angeordneten zweiten Abschnitt (240), welcher eine vierte hydraulisch in Richtung des Ventilsitzes (6) wirkende Fläche bereitstellt, und wobei ein weiteres Verhältnis der hydraulisch wirksamen vierten Fläche zu der hydraulisch wirksamen dritten Fläche in einem Bereich zwischen 0,3 und 0,7 liegt.

7. Das Sitzventil (2) gemäß dem Anspruch 6, wobei ein bzw. der gedachte Mantel (42) eines bzw. des gedachten zur Zustellachse (16) koaxialen Zylinders durch Falten (230, 232) des zweiten Faltenbalgs (222) und durch den Sitzbereich (20) bzw. den weiteren Sitzbereich verläuft.

8. Das Sitzventil (2) gemäß dem Anspruch 7, wobei ein dritter Abstand des gedachten Mantels (42) und einer maximalen medienseitigen zur Zustellachse (16) lotrechten Ausdehnung der Falten (230, 232) des zweiten Faltenbalgs (222) und ein vierter Abstand des gedachten Mantels (42) und einer minimalen medienseitigen Ausdehnung der Falten (230, 232) des zweiten Faltenbalgs (222) sich um maximal 20 %, insbesondere um maximal 10 % voneinander unterscheiden.

9. Das Sitzventil (2) gemäß dem Anspruch 7, wobei der gedachte Mantel (42) äquidistant zu einer maximalen medienseitigen zur Zustellachse (16) lotrechten Ausdehnung (fmax) der Falten (230, 232) des zweiten Faltenbalgs (222) und einer minimalen medienseitigen zur Zustellachse (16) lotrechten Ausdehnung (fmin) der Falten (230, 232) des zweiten Faltenbalgs (222) ist.

10. Das Sitzventil (2) gemäß einem der Ansprüche 6 bis 9, wobei das weitere Verhältnis der hydraulisch wirksamen vierten Fläche zu der hydraulisch wirksamen dritten Fläche in einem Bereich zwischen 0,4 und 0,6, insbesondere in einem Bereich zwischen 0,45 und 0,55, insbesondere in einem Bereich zwischen 0,47 und 0,52 liegt.

11. Das Sitzventil (2) gemäß einem der vorigen Ansprüche, wobei das Sitzventil (2) als Magnetsitzventil ausgebildet ist und einen elektromagnetischen Antrieb (12) umfasst, welcher mit der Antriebsstange (14) zu deren Bewegung entlang der Zustellachse (16) verbunden ist.

Fig. 1

Fig. 2

Fig. 3

EP 3 708 891 A1

**Europäisches Patentamt**
**European Patent Office**
**Office européen des brevets**

# EUROPÄISCHER RECHERCHENBERICHT

Nummer der Anmeldung

EP 20 15 7546

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2014/009362 A2 (KRONES AG [DE]) 16. Januar 2014 (2014-01-16) * das ganze Dokument * ----- | 1-11 | INV. F16K41/10 F16K39/02 |

RECHERCHIERTE SACHGEBIETE (IPC)

F16L
F16K

Der vorliegende Recherchenbericht wurde für alle Patentansprüche erstellt

| Recherchenort | Abschlußdatum der Recherche | Prüfer |
|---|---|---|
| Den Haag | 15. Juli 2020 | Lanel, François |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 15 7546

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-07-2020

| Im Recherchenbericht angeführtes Patentdokument | Datum der Veröffentlichung | Mitglied(er) der Patentfamilie | Datum der Veröffentlichung |
|---|---|---|---|
| WO 2014009362 A2 | 16-01-2014 | CN 104540774 A | 22-04-2015 |
| | | DE 102012211926 A1 | 09-01-2014 |
| | | EP 2870103 A2 | 13-05-2015 |
| | | WO 2014009362 A2 | 16-01-2014 |

------------------------------------------------------------------------------------------

EPO FORM P0461

Für nähere Einzelheiten zu diesem Anhang : siehe Amtsblatt des Europäischen Patentamts, Nr.12/82